Europäisches Patentamt

European Patent Office

Office européen des brevets

(11) Veröffentlichungsnummer : **0 042 919**
B1

# (12) EUROPÄISCHE PATENTSCHRIFT

(45) Veröffentlichungstag der Patentschrift :
17.07.85

(21) Anmeldenummer : 81102657.4

(22) Anmeldetag : 08.04.81

(51) Int. Cl.⁴ : **B 01 D 21/00**, C 02 F 1/34,
B 30 B 9/04, B 02 C 1/00,
B 02 C 2/00, B 02 C 4/00,
B 06 B 1/18, F 15 B 21/12

(54) Verfahren und Vorrichtung zum Be- und Verarbeiten von Materialien, insbesondere von fliessfähigen Feststoffgemischen und Dispersionen, durch schwingende Werkzeuge.

(30) Priorität : 26.06.80 DE 3023886

(43) Veröffentlichungstag der Anmeldung :
06.01.82 Patentblatt 82/01

(45) Bekanntmachung des Hinweises auf die Patenterteilung : 17.07.85 Patentblatt 85/29

(84) Benannte Vertragsstaaten :
AT BE CH DE FR GB IT LI LU NL SE

(56) Entgegenhaltungen :
EP-A- 0 024 748
DE-A- 2 439 991
FR-A- 1 338 327
FR-A- 2 341 765
US-A- 1 662 180
US-A- 3 174 404

(73) Patentinhaber : Sieke, Helmut, Dipl.-Ing.
Bingertstrasse 10
D-6200 Wiesbaden (DE)

(72) Erfinder : Sieke, Helmut, Dipl.-Ing.
Bingertstrasse 10
D-6200 Wiesbaden (DE)

(74) Vertreter : Junius, Walther, Dr.
Wolfstrasse 24
D-3000 Hannover 81 (DE)

EP 0 042 919 B1

**Beschreibung**

Die Erfindung betrifft ein Verfahren und eine Vorrichtung zum Be- und Verarbeiten von Materialien, insbesondere von fließfähigen Feststoffgemischen und Dispersionen, durch schwingende Werkzeuge, bei dem das Werkzeug und/oder das Gegenwerkzeug mit einer Reihenfolge nicht sinusförmiger Impulse beaufschlagt wird, wobei die Vorrichtung mit einem am Werkzeug und/oder am Gegenwerkzeug angreifenden hydraulischen Servomotor ausgestattet ist, der mittels Hydraulikflüssigkeit aus einem Steuerschieber beaufschlagt wird, der den Servomotor in ständig sich wiederholender Folge schnell abwechselnd einmal an die Rücklaufleitung, das andere Mal an die Druckleitung anschließt.

Ein derartiges Verfahren und eine derartige Vorrichtung sind aus der FR-A-23 41 765 bekannt geworden. Hier werden in Vorrichtungen zur Zerkleinerung von Gestein Schwingungen angewandt, die die Form von Rechteckimpulsen aufweisen. Zur Erzeugung dieser Impulse dienen Hydraulikzylinder, denen ein Steuerschieber vorgeschaltet ist, der in einer zylindrischen Buchse rotiert und abwechselnd die Druckleitung und die Rücklaufleitung an den Hydraulikzylinder anschließt. Solche Steuerschieber sind eingehend in der deutschen Patentschrift 19 57 469 sowie in der deutschen Patentschrift 22 13 577 beschrieben. Durch diese Steuerschieber wurden Möglichkeiten geschaffen, um Materialien intensiver als zuvor bearbeiten zu können, wo man die Werkzeuge nur sinusförmige Schwingungen ausführen ließ, z. B. in der Zerteilung von Luft bei der biologischen Abwasserreinigung (FR-A-13 38 327), bei der Ausfällung von Feststoffen bei der Abwasserreinigung (US-A-16 62 180 und DE-A-24 39 991) sowie bei der Zerspannung von Werkstücken auf Drehbänken (US-A-31 74 404). Eine weitere Möglichkeit der Behandlung ist in der DE-A-24 18 858.7 und in der EP-A-00 24 748 angegeben. Ermöglicht wurden in allen Fällen Schwingungen durch Impulshydraulik-Steuergeräte, bei denen in mittels Hydrauliköl Impulse erzeugt werden und über Servomotore in Form von Drehmotoren und/oder Hydraulik-Zylinder-Kolben-Einheiten in mechanische Kraftstöße umgesetzt werden.

Die vorliegende Erfindung hat nun besondere Bedeutung für die Bearbeitung von fließfähigen Feststoffgemischen, Dispersionen und Emulsionen durch schwingende Werkzeuge. Es hat sich bei Versuchen herausgestellt, daß die Anwendung der Impulshydraulik auf fließfähige Gemische sowohl zu einer Entmischung als auch zu einer intensiven, homogenen Vermischung führen kann. Durch Anwendung bestimmter nicht sinusförmiger Impulsformen mit höheren Frequenzen kann man eine Entmischung erreichen, während man bei Anwendung gleicher Werkzeuge bei um die Hälfte oder noch tieferen Frequenzen zu einer homogenen Mischung gelangen kann.

Die Erfindung hat erkannt, daß man bei vielen Arbeitsvorgängen, die in Maschinen und Vorrichtungen ausgeführt werden, bei denen ein Werkzeug motorisch relativ zu einem Gegenwerkzeug bewegt wird, Verbesserungen des Arbeitsvorganges im Sinne einer schnelleren und intensiveren Bearbeitung erreichen kann, wenn man dem Werkzeug eine Vibration aufzwingt, die im Bereich bestimmter Frequenzen, Beschleunigungen und Schwingungsamplitudenformen liegt.

Die Erfindung hat weiter erkannt, daß bei vielen Arbeitsvorgängen, wie beispielsweise der Trennung von Feststoffgemischen oder von Dispersionen aus Feststoffen und Flüssigkeiten die Trennung durch Anwendung von kontrollierten Impulsfolgen bestimmter Art erheblich erleichtert werden kann.

Es ist die Aufgabe der Erfindung, ein Verfahren und eine Vorrichtung zu schaffen, mit der die Bearbeitungsintensität von Materialien erheblich gesteigert werden kann und — bei Anwendung auf fließfähige Gemische — mit der spezifisch schwerere Teile relativ schnell und mit niedrigem Energieaufwand abgeschieden werden können.

Die Erfindung besteht darin, daß man im Laufe der Behandlung die Beschleunigungen und/oder die Schwingungsfrequenz und/oder die Schwingungsamplitudenform mehrfach kontinuierlich ändert, indem man in einem hydraulischen Steuerschieber mit rotierendem Steuerkolben diesen axial verschiebt und dessen Drehzahl kontinuierlich ändert.

Hierdurch erreicht man erstaunlicherweise Wirkungen, die sich sonst nur mit großem Energieaufwand und durch lange Bearbeitungen erreichen lassen : werden beispielsweise auf Werkzeugmaschinen Materialien mit schwingenden Werkzeugen behandelt, so wird die Bearbeitung durch unterschiedliche Beschleunigungs-Höchstwerte bei der Hin- und bei der Rückbewegung schneller und intensiver bearbeitet. Werden Festkörper durch schabende und schleifende Werkzeuge behandelt, die eine Hin- und Herbewegung aufweisen, so arbeiten die Werkzeuge intensiver, wenn sie bei ihrer Hinbewegung mit anderen Beschleunigungs-Höchstwerten als bei ihrer Rückbewegung beaufschlagt werden.

Insbesondere aber bei der Be- und Verarbeitung von fließfähigen Gemischen, seien sie aus Feststoffen, aus Flüssigkeiten oder aus Feststoff-Flüssigkeits-Gemischen zusammengesetzt, lassen sich auf diese Weise erstaunliche Wirkungen erzielen. Durch eine Vibration, insbesondere im Bereich von 50 Hertz bis 10 000 Hertz wird erstaunlicherweise ein schnelles Agglomerieren der in Schwebe befindlichen Teile erreicht, die, wenn sie erst einmal zu größeren Teilen agglomeriert sind, recht schnell zum Boden absinken und dort liegenbleiben. Dabei ist für das Vibrieren nur relativ wenig Energie aufzubringen, erheblich weniger Energie als beispielsweise in Zentrifugen, die bei Dispersionen oft auch nur eine mäßige Wirkung zeigen.

Durch eine ständige Änderung der Beschleunigungen und/oder der Schwingungsfrequenz und/oder der Schwingungsamplitudenform erreicht man eine besonders intensive Be- und Verarbeitung dadurch, daß verschieden große Teile auf unterschiedliche Frequenzen und unterschiedliche Amplituden anders reagieren. Durch eine Änderung der Beschleunigungen, der Schwingungsfrequenz und der Schwingungsamplitudenform gelangt man in Bereiche, bei denen die verschiedenen Materialteile besonders intensiv reagieren. Insbesondere ist es vorteilhaft, wenn man die Schwingungsfrequenzen zwischen zwei Grenzwerten mehrmals variieren läßt. Dabei ist es besonders vorteilhaft, wenn die Materialien mit Frequenzspektren, z. B. 50., 160 Hertz, 150... 450 Hertz oder dergl. behandelt werden.

Dieses Verfahren kann in verschiedensten technischen Prozessen angewendet werden : In Kläranlagen sowohl in Absetzbecken als auch bei der Schlammentwässerung, in der Papierfabrikation, in der Erzgewinnung und ähnlichen Bereichen, wo Feststoffe von Flüssigkeiten oder voneinander getrennt werden müssen, ebenso aber — meist mit niedrigeren Frequenzen — auch dort, wo zu mischen ist, wie beispielsweise in der Baustoffindustrie, der Schmirgelscheibenfabrikation und anderen Industriezweigen.

Ein wesentliches Merkmal der Erfindung besteht darin, daß das Werkzeug und/oder das Gegenwerkzeug mit einer kontrollierten Vibrationsbewegung beaufschlagt wird. Auf diese Weise lassen sich viele Arbeitsvorgänge intensivieren und schneller durchführen. Zum Beispiel das Auspressen von pflanzlichen oder tierischen Stoffen, da die Vibrationsbewegung zu einem verbesserten Aufschließen, aber auch zu einer dichteren Lagerung der Feststoffe führen kann.

Insbesondere ist das dann der Fall, wenn die Vibrationsbewegung quer zur Bewegungsrichtung des Werkzeuges verläuft. Wird beispielsweise die eine Walze eines Walzenpaares, welches Pflanzen zerquetscht, vibriert, so tritt während des Quetschvorganges ein Zerreiben der Pflanzenteile auf, das zu einem erheblich verbesserten Aufschließen führt. Wird Steinobst in einer Saftpresse gepreßt, so kann das Einführen einer Vibrationsbewegung zu einer erheblich dichteren Lagerung der Feststoffe und damit zu einem verbesserten Auspressen führen.

Um derartige Vibrationen nicht auf den Fabrikboden, auf dem die Maschine aufgestellt ist, zu übertragen, kann es zweckmäßig sein, Werkzeug und Gegenwerkzeug gegenphasig mit einer Vibrationsbewegung zu beaufschlagen. In gleicher Weise lassen sich Resonanzschwingungen eliminieren.

Da Vibrationen insbesondere dann auf das Maschinengestell in unerwünschter Weise übertragen werden, wenn zwischen Werkzeug und Gegenwerkzeug nicht genügend zu behandelnder Stoff vorhanden ist, also dann, wenn die Maschine leer oder nahezu leer läuft, ist es zweckmäßig, wenn man die Vibrationsbewegung unterbricht, wenn sich Werkzeug und Gegenwerkzeug so weit genähert haben, daß ein bestimmter vorgegebener Abstand unterschritten wird.

Das erfindungsgemäße Verfahren läßt sich sehr gut mit einer Vorrichtung ausführen, die gekennzeichnet ist durch eine am Steuerschieber angreifende Vorrichtung, mit der die Frequenz und/oder die Amplitude von sich im Steuerschieber bewegenden Teilen des Steuerschiebers zu verändern ist, und eine Vorrichtung, mit der die Drehzahl des Antriebsmotors zu verändern ist.

Mit dieser Vorrichtung lassen sich Reihenfolgen nicht sinusförmiger Impulse erzeugen, die zu erstaunlichen Wirkungen bei der Durchführung der Arbeitsverfahren führen. Durch die nicht sinusförmigen Pulse, die in ihrer Frequenz, Beschleunigung oder Amplitude geändert werden, wird die Bearbeitungsgeschwindigkeit erheblich erhöht und es lassen sich Feststoffe in trockenem Zustand voneinander trennen, die sonst nur mühsam in chemischen und/oder Flotationsverfahren und ähnlichen physikalischen Vorgängen getrennt werden können. Hierbei ist es aber nicht nur das spezifische Gewicht, welches zu einem Ausschwimmen bestimmter Teile in Feststoffgemischen während der Vibration führen kann, sondern es sind auch bestimmte Merkmale der unterschiedlichen Korngröße und/oder der Oberfläche, die zu dieser Trennung unter dem Einfluß von Vibrationen führen. So schwimmen Gegenstände mit sehr glatten Oberflächen aus Gegenständen mit rauheren Oberflächen beispielsweise aus.

Eine leicht herstellbare Vorrichtung, deren Energieverbrauch in niedrigen Grenzen liegt, enthält einen hydraulischen Steuerschieber, dessen rotierender, axial verschiebbarer Steuerzylinder umfangsringnuten und von diesen abzweigende mit einer achsparalleleren Komponente verlaufende Zweigkanäle aufweist, die an den Leitungen vorbeilaufen, während die Ringumfangsnuten an die Druckleitung und die Rücklaufleitung angeschlossen sind bzw. mit deren Mündungen im Gehäuse fluchten und durch eine Vorrichtung am Steuerzylinder, mit welcher dieser axial in einer ständigen Schwingung verschiebbar ist und/oder durch eine Vorrichtung am Antriebsmotor des Steuerzylinders, mit welcher dessen Drehzahl in bestimmten Bereichen veränderbar ist.

Vorteilhaft ist es, wenn der mit einem Vibrationsantrieb versehene Körper eine Platte ist. Es kann sich aber auch bei dem mit Vibrationsantrieb versehenen Körper um ein Plattenpaar handeln, die durch den Vibrationsantrieb miteinander verbunden sind, so daß diese beiden Platten gegenphasig zueinander schwingen. Die mit einem Vibrationsantrieb versehene Platte kann auch eine Wand oder ein Wandteil des Beckens bilden. Ebenso lassen sich schwingende Rotationsplatten einsetzen, durch die der hierfür erforderliche Bauraum verkleinert wird.

Zweckmäßigerweise besteht der Vibrationsantrieb aus einer Hydraulik-Zylinder-Kolben-Einheit. Ein derartiger hydraulischer Vibrationsantrieb ist in der Lage, geeignet starke Vibrationen in die Flüssigkeit zu übertragen. Darüber hinaus ist ein derartiger hydraulischer Vibrationsantrieb in der Lage, Vibrationen verschiedenster Frequenzen, auch hochfrequenter Frequenzen, die in den Bereich mehrerer Kilo-Hertz gehen, wirksam in die Flüssigkeit zu übertragen. Neben der hohen Leistungsdichte der Hydraulik wirkt sich der lineare Beschleunigungsvorgang vorteilhaft aus.

Der mit Vibrationsantrieb versehene Körper kann aber auch ein mit Hydraulikflüssigkeit gefüllter Hohlkörper sein, dessen Hydraulikflüssigkeit in eine Vibrationsschwingung versetzt ist.

Der Vibrationsantrieb wird vorteilhafterweise dadurch realisiert, daß der Hydraulik-Zylinder-Kolben-Einheit bzw. dem Hohlkörper ein hydraulisches Steuergerät zugeordnet ist, welches einen rotierenden oder schwingenden Steuerkolben aufweist, mit dem die zum Hydraulikzylinder bzw. Hohlkörper führende Leitung abwechselnd an die Druckleitung und an die Rücklaufleitung anschließbar ist. Durch dieses abwechselnde Anschließen an die Druckleitung und die Rücklaufleitung werden starke Impulse erzeugt, die sich wirksam in die Flüssigkeit übertragen lassen.

Bei der Verwendung dieser Vorrichtung in Klärbecken ist es vorteilhaft, wenn mindestens eine vibrierende Platte vertikal in die Flüssigkeit im Becken hineingehängt ist. Hierdurch lassen sich die Feststoffe aus einer Dispersion mit überwiegendem Flüssigkeitsanteil mit geringem Energieaufwand wirkungsvoll und schnell agglomerieren, so daß sie sich am Boden des Beckens absetzen. In einer Kläranlage wird man daher in einem vorgeschalteten Becken die vibrierenden Platten zweckmäßigerweise vertikal in die Flüssigkeit hineinhängen.

Aus einer Dispersion mit sehr starkem Feststoffanteil, die man bereits als Sumpf bezeichnen könnte, lässt sich Flüssigkeit dadurch weitgehend an die Oberfläche befördern, daß mit einem horizontal liegenden vibrierenden Körper gearbeitet wird, der zweckmäßigerweise am Grunde des Beckens angeordnet sein kann. Dieses wird man zweckmäßigerweise bei einem nachgeschalteten Becken einer Kläranlage anwenden, wo der anfallende Schlamm noch weiter entwässert werden soll.

In diesem Anwendungsbereich ist es vorteilhaft, wenn am Grunde eines Beckens Düsen für den Austritt von Luft oder Sauerstoff angeordnet sind, wobei auch die vibrierende Platte gelocht sein kann, um in oder unter den Löchern dieser Düsen diese anzuordnen. Auf diese Weise wird noch während des Ausfällens der entstehende Schlamm bereits mit Sauerstoff angereichert, so daß die Fäulnisbakterien schon hier ihre Tätigkeit aufnehmen können.

Beim Anwendungsbereich sich bewegender Werkzeuge, insbesondere zum Abspanen und Schleifen ist es vorteilhaft, wenn Werkzeug und Gegenwerkzeug gegenphasig mit der Vibration beaufschlagt werden, um die Übertragung der Vibrationen auf das Maschinengestell und den Fabrikboden zu vermeiden.

Als besonders vorteilhaft hat es sich herausgestellt, wenn die Vibrationsbewegung quer zur Bewegungsrichtung des Werkzeuges verläuft.

Zur Erzeugung der Vibrationen dient vorteilhafterweise ein am Werkzeug und/oder am Gegenwerkzeug angreifender hydraulischer Servomotor, der mittels Hydrauliköl aus einem Drehschieber beaufschlagt wird, der den Servomotor in ständig sich wiederholender Folge sehr schnell abwechselnd einmal an die Rücklaufleitung, das andere Mal an die Druckleitung anschließt.

Um in einem Leerlauf der Maschine vorzeitige Werkzeugabnutzung oder gar Werkzeugzerstörung und unnötige Übertragung von Vibrationen auf das Maschinengestell und den Fabrikboden zu vermeiden, ist es zweckmäßig, eine Steuervorrichtung für den Vibrationsmotor vorzusehen, die diesen abschaltet, wenn ein bestimmter vorgebbarer Abstand zwischen Werkzeug und Gegenwerkzeug unterschritten wird. Zweckmäßigerweise kann die Steuervorrichtung für diesen Zweck mit einem Druckgeber oder mit einem Weggeber ausgestattet sein.

Das Wesen der vorliegenden Erfindung ist nachstehend anhand von schematisch in der Zeichnung dargestellten Ausführungsbeispielen näher erläutert. Es zeigen:

Figur 1 einen Querschnitt durch ein Absetzbecken, in das ein Plattenpaar eingehängt ist und in welchem Feststoffe aus einer Dispersion getrennt werden.

Figur 2 einen Längsschnitt durch das Becken.

Figur 3 einen Querschnitt durch ein anderes Becken.

Figur 4 einen Querschnitt durch ein weiteres Becken.

Figur 5 einen Querschnitt durch ein Steuergerät.

Figur 6 einen Querschnitt durch ein anderes Steuergerät.

Figur 7 eine Seitenansicht einer Vorrichtung mit einem Walzenpaar zum Zerbrechen von erzhaltigem Gestein.

Figur 8 eine Ansicht der Vorrichtung der Fig. 7.

Figur 9 einen Querschnitt durch einen hydraulischen Steuerschieber.

Figur 10 eine perspektivische Ansicht des rotierenden Zylinders dieser Steuervorrichtung.

Figur 11 einen Querschnitt durch eine Presse.

Figur 12 einen vergrößerten Querschnitt durch den Vibrator, der in dieser Presse eingelegt ist.

Figur 13 einen Querschnitt durch einen Backenbrecher.

Figur 14 eine Ansicht einer Kugelmühle.

Figur 15 eine Ansicht einer Feststofftrennvorrichtung.

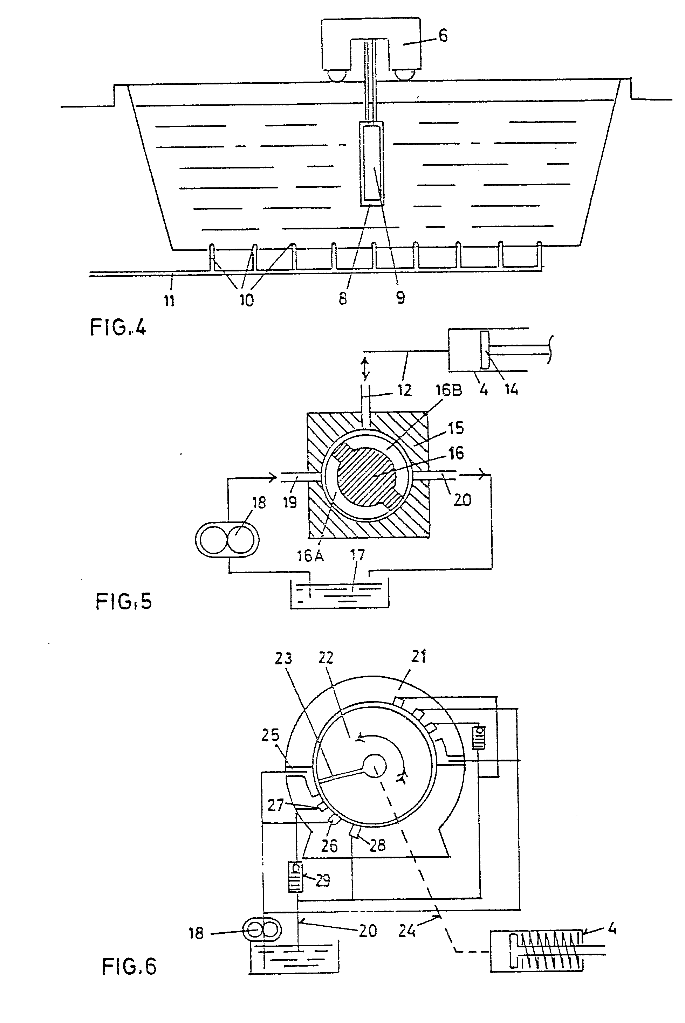

In dem Becken 1 befindet sich eine Dispersion 2, in die ein Paar Platten 3 eingehängt sind, die mittels einer Hydraulik-Zylinder-Kolben-Einheit 4 miteinander verbunden sind. Die Platten 3 hängen mittels Halterungen 5 an einem Wagen 6, der auf Schienen seitlich des Beckens verschiebbar ist. Dieser Wagen 6 weist Arbeitsmittel auf, mit denen die Platten hochziehbar sind, so daß sie auf verschiedene Höhen eingestellt werden können und auch ganz aus dem Becken herausgenommen werden können. Zum Antrieb der Hydraulik-Zylinder-Kolben-Einheit 4 wird ein Steuergerät benutzt, wie es in Fig. 5 oder 6 dargestellt ist. Dieses Steuergerät kann zweckmäßigerweise auf dem Wagen 6 ebenfalls angeordnet sein. Werden diese Platten mit herkömmlichen sinusförmigen Pulsen beaufschlagt, so vibrieren sie, es ändert sich jedoch nichts an der Dispersion. Erst bei Beaufschlagung der Platten mit nicht sinusförmigen Pulsen, und zwar solchen, bei denen die Beschleunigung in der einen Richtung größer als in der anderen Richtung ist, tritt ein schnelles Ausfallen der Feststoffe ein, wenn die Frequenz sich immer wieder in bestimmten Grenzen kontinuierlich ändert.

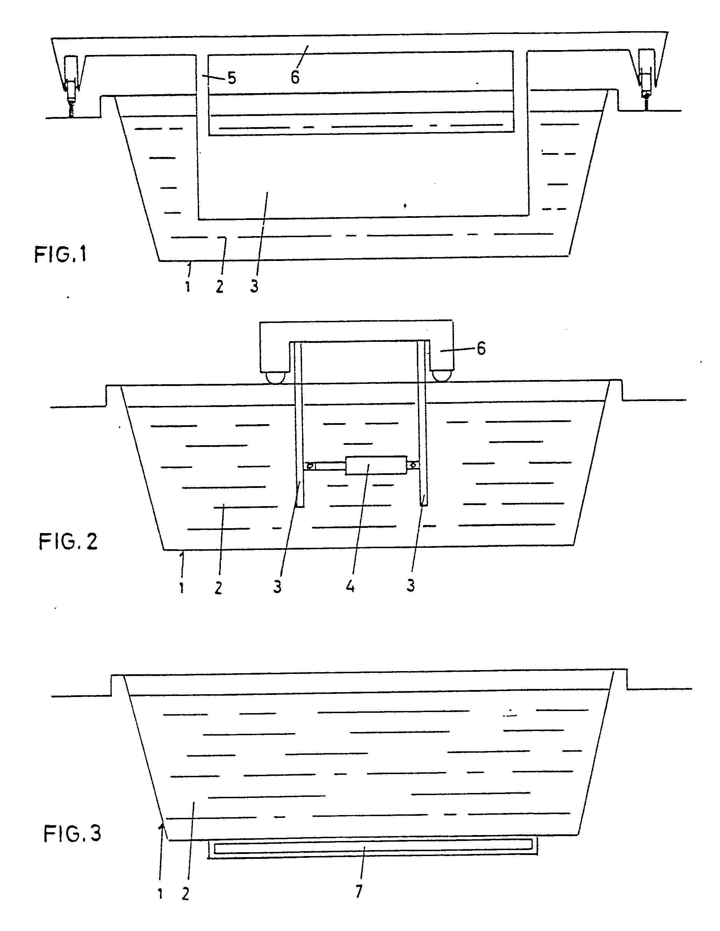

Im einem Klärwerk würde man ein Becken, wie es in Fig. 1 und 2 dargestellt ist, zweckmäßigerweisen für die Klärung des aus der Kanalisation ankommenden Schmutzwassers benutzen.

In Fig. 3 ist ein Becken dargestellt, bei dem ein Teil des Bodens durch einen vibrierenden Körper 7 gebildet wird, der auch aus Platten bestehen kann, aber auch mit Hydraulikflüssigkeit gefüllter Hohlkörper sein kann. Das Becken der Fig. 3 wird zweckmäßigerweise benutzt, um in einer Kläranlage aus dem Klärschlamm weiteres Wasser sich dadurch abscheiden zu lassen, daß dieses an die Oberfläche tritt.

Man kann auch Becken der Fig. 1 zusätzlich mit dem vibrierenden Körper 7 ausstatten, um abwechselnd erst Schmutzwasser zu klären und anschließend den Schlamm noch weiter zu verdichten, wobei man zweckmäßigerweise in ein Becken den Schlamm aus weiteren Becken hinzufügt.

In das Becken 1 der Fig. 4 ist ein Hohlkörper 8 hineingehängt, dessen Inneres mit Hydraulikflüssigkeit 9 gefüllt ist. Diese Hydraulikflüssigkeit bringt man zum Vibrieren, so daß auch die Wandungen des Hohlkörpers 8 vibrieren. Da es eine Flüssigkeit ist, die im Inneren des Hohlkörpers 8 vibriert, ist eine gute Anpassung an die Flüssigkeit im Becken 1 gewährleistet. Am Grunde des Beckens befinden sich Düsen 10, die über die Leitung 11 gespeist werden und in das Becken Luft oder Sauerstoff einführen. Zweckmäßigerweise lässt man die Luft. bzw. Sauerstoffzufuhr erst erfolgen, nachdem sich eine Schlammschicht nicht unwesentlicher Dicke über den Düsen abgesetzt hat, weil sich dann die aus den Düsen austretenden Gasblasen besser im Schlamm verfangen und nicht an die Oberfläche der Dispersion im Becken 1 treten.

Auch der Hohlkörper 8 hängt an einem Wagen 6, der Arbeitsmittel zum Hochziehen des Hohlkörpers 8 aufweist, so daß der Hohlkörper 8 entweder ganz aus dem Becken herausnehmbar ist oder doch zumindest an einen Beckenrand fahrbar ist, um die Schlammentleerung zu vereinfachen.

Der als Vibrationsantrieb dienende Hydraulikzylinder 4 mit dem in seinem Inneren verschiebbaren Kolben 14 bzw. der Hohlkörper 8 sind über die Leitung 12 an das Steuergerät angeschlossen. Eine Ausführungsform des Steuergerätes ist in Fig. 5 gezeigt. Dieses Steuergerät besteht aus einem Steuerschieber 15, in welchem ein Steuerkolben 16 rotiert. Drucköl aus dem Vorratsbehälter 17 wird in der Pumpe 18 unter Druck gebracht und über die Leitung 19 in das Gehäuse des Steuerschiebers 15 eingeführt. Da der Steuerkolben 16 zwei Nuten 16A und 16B aufweist, wird mit ihm die zum Hydraulikzylinder 4 bzw. Hohlkörper 8 führende Leitung 12 abwechselnd einmal mit der Druckleitung 19, das andere Mal mit der Rücklaufleitung 20 verbunden, wobei die Frequenz durch die Rotationsgeschwindigkeit des Steuerkolbens 16 gegeben ist.

In einer anderen Ausführungsform, die in Fig. 6 dargestellt ist, rotiert im Steuerschieber 21 ein Steuerkolben 22, der einen ins Innere führenden Kanal 23 aufweist, der über den Zentralkanal 24 mit dem Hydraulikzylinder 4 bzw. einem Hohlkörper 8 verbunden ist. Auch hier wird Drucköl mittels einer Pumpe 18 erzeugt und den Bohrungen bzw. Nuten 25, 26 zugeführt. Zwischen je zwei Bohrungen bzw. Nuten 25, 26 befinden sich weitere Bohrungen 27, 28, an denen der Kanal 23 ebenfalls wie an den Nuten bzw. Bohrungen 25, 26 vorbeiläuft. Die Bohrung 28 ist direkt an die Rücklaufleitung 20 angeschlossen, die Bohrung 27 über ein einstellbares Überdruckventil 29. Mit dieser Vorrichtung lassen sich Druckimpulse erzeugen, deren Höhe periodisch wechselt.

Bei der Bearbeitung von Klärschlamm wurde beispielsweise mit einer Frequenz von 50 Hertz gearbeitet, die Platten hatten eine Amplitude von 3-4 mm, die Beschleunigungs-Höchstwerte lagen bei 30 g, bei der Rückbewegung lagen sie um etwa die Hälfte oder noch niedriger. Es wurde eine ausserordentlich schnelle Trennung der Feststoffanteile aus der wässrigen Phase erreicht.

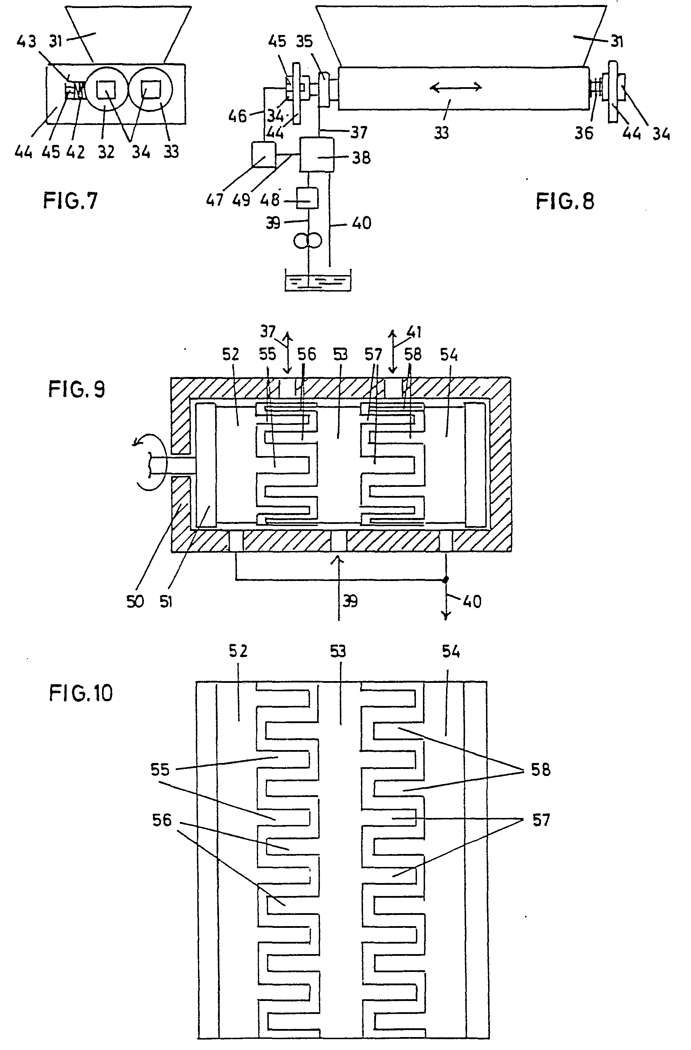

Die Vorrichtung der Fig. 7 und 8 besteht aus einem Becken 31 in Form eines Aufgabetrichters, an dessen unterem Ende sich ein Walzenpaar 32, 33 befindet. Diese Walzen 32, 33 laufen mit gegensinnigem Drehsinn. Sie können als Werkzeug und Gegenwerkzeug aufgefaßt werden. Zumindest die eine Walze 32, 33 wird mit einer Vibration beaufschlagt, die in Axialrichtung verläuft. Dazu ist zwischen ihrer einen Stirnseite und ihrem Lager 34 ein hydraulischer Arbeitszylinder 35 angeordnet, während zwischen ihrer anderen Stirnseite und dem dieser Stirnseite zugeordneten Lager eine Feder 36 angeordnet ist. Der Hydraulikzylinder 35 wird über eine Leitung 37 aus einem Steuergerät 38 gespeist. Der Steuergerät 38 wird einerseits aus einer nicht dargestellten Druckquelle über die Leitung 39 gespeist und ist weiter an eine Rücklaufleitung 40 angeschlossen, die zu einem Vorratsbehälter führt, aus dem die Druckquelle das unter Druck zu setzende Hydraulik̈öl bezieht.

In der gleichen Weise wie in Fig. 8 anhand der Walze 33 dargestellt, kann nicht nur die Walze 33 mit axialen Schwingungen beaufschlagt werden, sondern es kann auch die Achse 32 mit axialen Schwingungen beaufschlagt werden. Diese werden ebenfalls durch einen Arbeitszylinder 35 erzeugt, der jedoch gegenphasig erregt wird. Zu dessen Speisung dient eine Speiseleitung 11, an die immer dann die Druckleitung 39 angeschlossen ist, wenn an die Leitung 37 die Rücklaufleitung 40 angeschlossen ist.

Durch die Beaufschlagung der einen Walze 35 oder beider Walzen 32, 33 mit axialen Schwingungen wird erreicht, daß das durch den Walzenspalt hindurchgehende Material nicht nur von den Walzen gequetscht und gepreßt wird, sondern darüber hinaus auch noch intensiv gerieben und damit unter Druck zerfasert und in seinen Teilen auseinandergerissen wird. Die aufgeprägten Querkräfte reduzieren dabei die Walzkräfte und erzielen ein feineres Material.

Damit bei einem Leerlauf der Vorrichtung nicht die Walzenoberfläche durch eine axiale Schwingung der Walzen gegeneinander zerrieben wird, ist eine Schutzvorrichtung vorgesehen, die die axiale Schwingung der Walzen abschaltet, sobald die Maschine im Leerlauf arbeitet. Das Lager 34 der Walze 33 ist verschiebbar entgegen der Kraft einer Feder 42 in einer Kulisse 43 des Maschinengestells 44 geführt. Zwischen dem Angriffsort der Feder 42 am Ständer 44 ist eine Druckmeßvorrichtung 45 angeordnet, welche den von der Feder 42 ausgeübten Druck auf das Maschinengestell 44 mißt. Das ist derjenige Druck, mit dem die Walzen 32, 33 aneinander anliegen. Dieser Druck erhöht sich, je weiter die Walzen 32, 33 durch das zu verarbeitende, durch den Walzenspalt hindurchgehende Gut auseinandergedrückt werden. Der Druckgeber 45 ist über die Leitung 46 an ein Steuergerät 47 angeschlossen. An das Steuergerät 47 ist ein Magnetventil 48 über die Leitung 49 angeschlossen. Das Magnetventil 48 liegt in der Druckleitung 39, die zum Steuerschieber 38 führt. Bei Unterschreiten eines bestimmten Druckwertes des Druckgebers 45 wird das Magnetventil 48 geschlossen, so daß der Steuerschieber 38 nicht mehr mit Drucköl beaufschlagt wird, sondern lediglich an die Rücklaufleitung 40 angeschlossen ist. Dadurch ist auch der Arbeitszylinder 35 nicht mehr an die Druckleitung angeschlossen. Es findet somit keine Axialbewegung der Walze 33 bzw. auch Walze 32 mehr statt. Diese Axialbewegung findet erst dann wieder statt, wenn durch Vergrößerung des Walzenspaltes infolge eingezogenen zu verarbeitenden Materiales zwischen die Walzen 32, 33 der Druck im Druckgeber 45 wieder ansteigt und damit das Steuergerät 47 das Magnetventil 48 öffnet.

Anstelle des Druckgebers 45 können auch Weggeber verwendet werden, die den Abstand zwischen den Lagern 34 der Walzen 32 messen oder direkt die Breite des Walzenspaltes oder den Abstand der Walzen an den Aussenkanten oder den Abstand der Walze 33 von einer Traverse des Maschinengestelles 44 messen.

Das hydraulische Steuergerät 38 ist folgendermaßen aufgebaut (s. Fig. 9) : in einem Steuerschieber 50 ist ein rotierender Zylinder 51 axial verschiebbar und feststellbar gelagert. Über die Leitung 39 wird Drucköl in das Gehäuse 50 des Steuerschiebers eingespeist, über die Leitungen 40, Rücklaufleitungen, wird Öl aus dem Steuerschieber 38 in den Vorratsbehälter zurückgeführt. Der rotierende Zylinder oder Steuerkolben 51 weist um den Umfang des Zylinders herum verlaufende Ringnuten 52, 53, 54 auf. Diese Ringnuten weisen axial verlaufende Zweignuten 55, 56, 57, 58 auf. Die Zweignuten 55, 56 sind so angeordnet, daß sie zwischeneinander greifen. Ebenso sind die Zweignuten 57 und 68 so angeordnet, daß sie zwischeneinander greifen. Die Zweignuten 56, 57 sind in Umfangsrichtung versetzt gegeneinander angeordnet. In die Ringleitung 53 wird über die Leitung 39 Drucköl eingespeist, welches in die Zweignuten, 56, 57 fließt. Die Ringnuten 52, 54 hingegen sind an die Rücklaufleitung 40 angeschlossen. Hierdurch ist folgendes erreicht : Bei rotierendem Zylinder 51 gelangt in ständiger Folge abwechselnd nacheinander Drucköl aus der Ringnut 55 über die Zweignuten 56 in die zum Arbeitszylinder 35 führende Leitung 37 für einen sehr kurzen Zeitraum. Sofort anschließend, nachdem sich eine Zweignut 56 an der Mündung der Leitung 37 im Gehäuse 50 vorbeigeschoben hat, schiebt sich eine Zweignut 55 vor diese Mündung der Leitung 37, so daß die Leitung 37 über die Zweignut 55 und die Ringnut 52 an die Rücklaufleitung 40 angeschlossen ist. Da der Zylinder 51 sich in ständiger Rotation befindet, findet dieses Anschließen an die Druckleitung 39 und an die Rücklaufleitung 40 in ständiger Folge statt. Die Drehgeschwindigkeit des Zylinders 51 bestimmt die Frequenz des ständigen Anschließens an die Druckleitung 39 und die Rücklaufleitung 40.

Gleiches geschieht mittels der Zweignuten 57 und 58 : über diese wird die Leitung 41 in ständig wechselnder Folge an die Druckleitung 39 und an die Rücklaufleitung 40 angeschlossen. Dies geschieht jedoch gegenphasig zur Leitung 37, da die Zweignuten 57 versetzt gegenüber den Zweignuten 56 angeordnet sind. Da man den Zweignuten 55 bis 58 zweckmäßigerweise eine sich zu ihrem äusseren Ende hin verjüngende Form gibt, kann durch eine Axialverschiebung des Zylinders 51 im Gehäuse 52 eine Veränderung der Dauer der hydraulischen Impulse erreicht werden, die durch das jeweilig kurzzeitige Anschließen an die Druckleitung 39 in den Leitungen 37 und 41 mittels des Steuerschiebers 38 erzeugt werden.

Der in Fig. 8 dargestellte Hydraulikzylinder 35 weist einen einseitig mit Drucköl beaufschlagten Kolben auf. Daher ist für die Rückstellung der Walze 33 die Feder 36 notwendig. Es können aber auch doppelt wirkende Hydraulikzylinder, deren Kolben beidseitig mit Drucköl beaufschlagt wird, verwendet werden. Bei diesen wird die eine Seite des Hydraulikzylinders an die Leitung 37, die andere Seite des Hydraulikzylinders an die Leitung 41 angeschlossen.

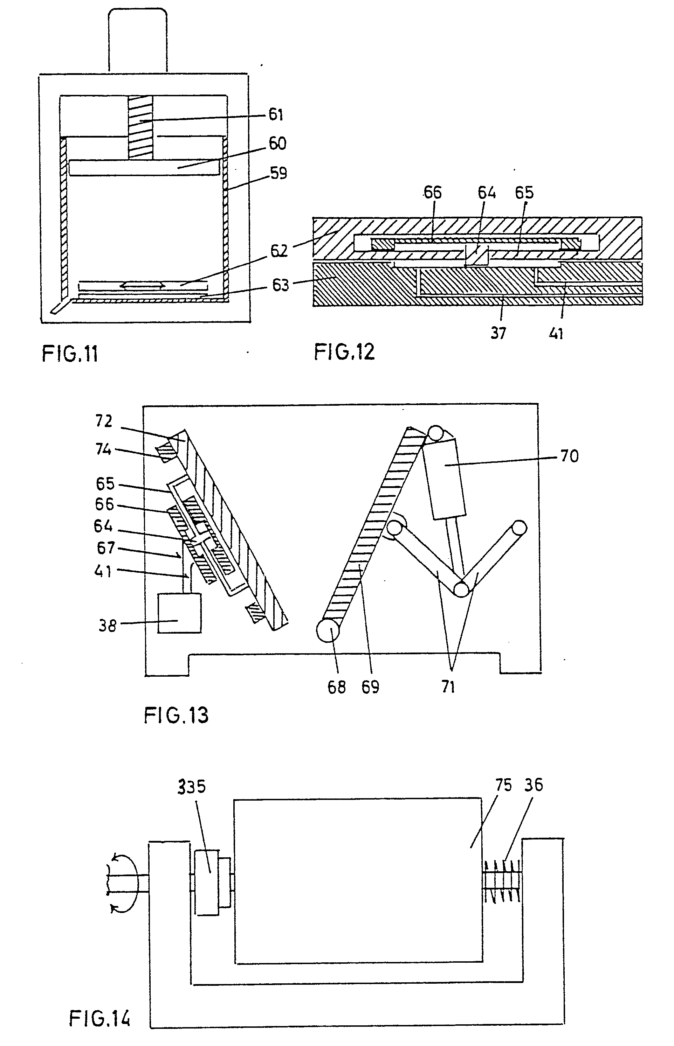

Die Presse der Fig. 11 dient zum Auspressen von Früchten. In einen mit dem Preßgut zu füllenden zylindrischen Gefäß 59 wird ein Kolben 60 mittels einer bekannten Verschiebevorrichtung, entweder einem Hydraulikzylinder oder einer Spindel 61 oder auf andere Weise, in Richtung gegen den Boden des zylindrischen Gefäßes 59 gedrückt. Auf dem Boden dieses zylindrischen Gefäßes 59, dessen Wandungen mit Öffnungen für den Abfluß des Fruchtsaftes versehen sind, ist ein Vibrator angeordnet, der in Fig. 12 näher dargestellt ist. Dieser besteht aus zwei Scheiben 62, 63, deren einander zugekehrte Stirnseiten aufeinander gelagert sind und die in Richtung der Ebene dieser Stirnseiten gegeneinander mittels eines Kolbens 64 bewegt werden, der mittels einer Kolbenstange 65 an der Scheibe 62 befestigt ist und in einem Hydraulikzylinder 66 verschiebbar angeordnet ist, der über die Leitungen 37 und 41 mit einem Steuerschieber 38 verbunden ist. Mit diesem Vibrator wird quer zur Bewegungsrichtung des Kolbens 60 eine Vibration am Boden des zylindrischen Gefäßes 59 erzeugt, die sich auf das zu behandelnde Gut im Inneren des Gefäßes 59 überträgt und zu einem besonders wirkungsvollen und schnellen Auspressen führt, da die Feststoffe sich besonders dicht ineinander lagern.

In Fig. 13 ist ein Backenbrecher gezeigt, dessen im Gestell 67 mittels der Welle 68 gelagerte verschwenkbare Backe 69 sich mittels des von einem Arbeitszylinder 70 angetriebenen Kniehebels 71 gegen die Gegenbacke 72 bewegt, die parallel zu ihrer Oberfläche in Schwingungen versetzbar ist.

Hierzu dient ein mittels der Kolbenstange 65 an der Backe 72 befestigter Kolben 64, der in einem Hydraulikzylinder 66 verschiebbar ist, dessen Leitungen 37, 41 an den Steuerschieber 38 angeschlossen sind. Die als Gegenwerkzeug dienende plattenförmige Backe 72 ist im Maschinengestell 67 mittels Gleitführungen 73 gelagert. Durch die Vibration der plattenförmigen Gegenbacke 72 ist erreicht, daß beim Brechen von Gestein durch den sich ständig geringfügig ändernden Angriffswinkel der von der beweglichen Backe 69 ausgehenden Kräfte das Brechen schneller und mit weniger Kraft erfolgt.

Bei der in Fig. 14 dargestellten Kugelmühle ist das sich drehende Mahlgefäß 75 axial mittels eines Arbeitszylinders 335 in Schwingungen versetzt, die durch das Zusammenwirken des Arbeitszylinders 335 mit der auf der anderen Gefäßseite angreifenden Feder 36 entstehen. Dadurch entsteht nicht nur durch den Kugelfall eine Mahlwirkung, sondern gleichzeitig auch dadurch, daß die am Grunde des Mahlgefäßes 75 befindlichen Kugeln das Mahlgut zwischen sich reiben, weil auf das Mahlgefäß 75 axiale Kräfte wirken, die das Gefäß in Schwingungen versetzen und damit auch die Mahlkörper im Inneren des Mahlgefäßes 75 in eine Bewegung versetzen.

Es gibt auch eine große Vielzahl von weiteren Anwendungsmöglichkeiten der Erfindung an den verschiedensten Maschinen und Vorrichtungen.

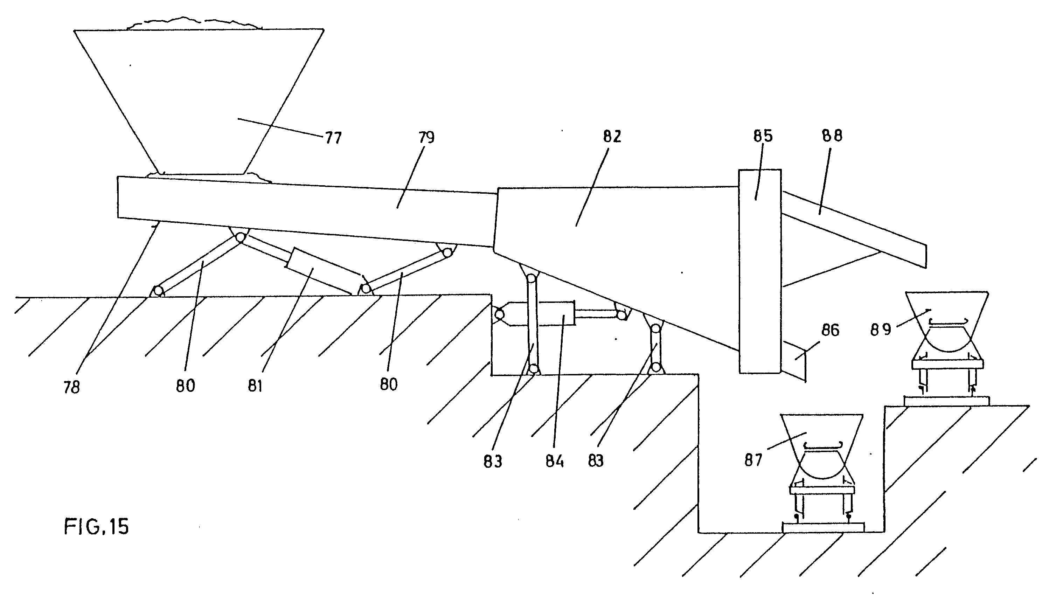

So beispielsweise auch in der Erzbereitung. Gebrochenes Erz, das auch einem Gemisch mit taubem Gestein besteht, wird zuerst in einem Backenbrecher nach Fig. 13 und dann in einem Walzenbrecher nach Fig. 7 und 8 auf gleichmäßige Korngröße zu einem Granulat zerkleinert. Dieses wird dann in den Trichter 77 der Feststofftrennvorrichtung der Fig. 15 aufgegeben. Aus diesem läuft das Feststoffgemisch auf eine erste, mit einem schrägen Boden 78 versehene, schwingende, im Querschnitt U-förmige Förderbahn 79, die von zwei Lenkern 80 getragen ist. Der Antrieb erfolgt hydraulisch über die Kolben-Zylinder-Einheit 81, die eine Vibrationsbewegung mit ungleichen Beschleunigungen in der Hin- und Herbewegung auf die Förderbahn 79 ausübt. Aus dieser fällt das Erz in eine zweite schwingende Führungsbahn 82, die von Lenkern 83 getragen ist und von der Kolben-Zylinder-Einheit 84 zu Vibrationen angetrieben ist. An deren Ende befindet sich eine feststehende Wand 85 mit einem unteren Ausfallschacht 86, aus dem das schwere Erz in die Lore 87 fällt, sowie einem oberen Ausfallschacht 88, aus dem dasleichtere taube Gestein in die Lore 89 fällt.

**Patentansprüche**

1. Verfahren zum Be- und Verarbeiten von Materialien, insbesondere von fließfähigen Feststoffgemischen und Dispersionen, durch schwingende Werkzeuge, bei dem das Werkzeug und/oder das Gegenwerkzeug mit einer Reihenfolge nicht sinusförmiger Impulse beaufschlagt wird, dadurch gekennzeichnet, daß man im Laufe der Behandlung die Beschleunigungen und/oder die Schwingungsfrequenz und/oder die Schwingungsamplitudenform mehrfach kontinuierlich ändert, indem man in einem hydraulischen Steuerschieber mit rotierendem Steuerkolben diesen axial verschiebt und/oder dessen Drehzahl kontinuierlich ändert.

2. Verfahren nach Anspruch 1, dadurch gekennzeichnet, daß man die Schwingungsfrequenz zwischen zwei Grenzwerten mehrmals variieren läßt.

3. Verfahren nach Anspruch 1, dadurch gekennzeichnet, daß das Werkzeug und das Gegenwerkzeug gegenphasig mit einer Vibrationsbewegung beaufschlagt werden.

4. Verfahren nach Anspruch 1, dadurch gekennzeichnet, daß die Vibrationsbewegung quer zur Bewegungsrichtung des Werkzeuges verläuft.

5. Verfahren nach Anspruch 1, dadurch gekennzeichnet, daß man die Vibrationsbewegung unterbricht, wenn sich Werkzeug und Gegenwerkzeug so weit genähert haben, daß ein bestimmter vorgegebener Abstand oder Endwert unterschritten wird.

6. Vorrichtung zur Durchführung des Verfahrens nach einem oder mehreren der Ansprüche 1 bis 5, mit einem am Werkzeug und/oder am Gegenwerkzeug angreifenden hydraulischen Servomotor, der mittels Hydraulikflüssigkeit aus einem Steuerschieber beaufschlagt wird, der den Servomotor in ständig sich wiederholender Folge sehr schnell abwechselnd einmal an die Rücklaufleitung, das andere Mal an die Druckleitung anschließt, gekennzeichnet durch eine am Steuerschieber (15, 21, 50) angreifende Vorrichtung, mit der die Frequenz und/oder die Amplitude von sich im Steuerschieber bewegenden Teilen (16, 22, 51) des Steuerschiebers zu verändern ist, und eine Vorrichtung, mit der die Drehzahl des Antriebsmotors zu verändern ist.

7. Vorrichtung nach Anspruch 6 zum Absetzenlassen spezifisch schwererer Teile, insbesondere zum Trennen von Feststoffen aus der flüssigen Phase einer Dispersion, bestehend aus mindestens einem Gefäß oder Becken, bei der in dem Gefäß oder Becken mindestens ein mit einem Vibrationsantrieb versehener Körper angeordnet ist, dadurch gekennzeichnet, daß der Vibrationsantrieb aus einer Hydraulik-Zylinder-Kolben-Einheit besteht oder daß der mit einem Vibrationsantrieb versehene Körper ein mit Hydraulikflüssigkeit (9) gefüllter Hohlkörper (8) ist, und daß der Hydraulik-Zylinder-Kolben-Einheit bzw. dem Hohlkörper ein hydraulisches Steuergerät zugeordnet wird, welches einen rotierenden oder schwingenden Steuerkolben (16) aufweist, mit dem die zum Hydraulikzylinder bzw. Hohlkörper führende Leitung (12) abwechselnd an die Druckleitung (19) und die Rücklaufleitung (20) anschließbar ist.

8. Vorrichtung nach Anspruch 7, dadurch gekennzeichnet, daß der mit einem Vibrationsantrieb versehene Körper aus mindestens einem Paar von Platten (33) besteht, das durch den Vibrationsantrieb miteinander verbunden ist.

9. Vorrichtung nach Anspruch 7, dadurch gekennzeichnet, daß am Grunde des Beckens (1) eine horizontal liegende Platte oder ein horizontal liegender vibrierender Körper (2) angeordnet ist.

10. Vorrichtung nach Anspruch 7, dadurch gekennzeichnet, daß am Grunde des Beckens (1) Düsen (10) für den Austritt von Luft oder Sauerstoff angeordnet sind.

11. Vorrichtung nach Anspruch 10, dadurch gekennzeichnet, daß die vibrierende Platte oder der vibrierende Hohlkörper (7) am Boden des Beckens (1) gelocht ist und in oder unter der Löchern die Düsen (10) angeordnet sind.

12. Vorrichtung nach Anspruch 6, gekennzeichnet durch eine Steuergerät (47) für den Vibrationsmotor, die diesen abschaltet, wenn ein bestimmter vorgebbarer Abstand zwischen Werkzeug und Gegenwerkzeug unter schritten wird.

13. Vorrichtung nach Anspruch 6, dadurch gekennzeichnet, daß Werkzeug und Gegenwerkzeug durch ein Walzenpaar (32, 33) gebildet ist, von denen mindestens die eine Walze (33) mittels eines Hydraulikzylinders (35) axial schwingend bewegt ist, wobei dem Hydraulikzylinder aus einem Steuergerät (38) in ständig wechselnder Folge Druckflüssigkeit über die Leitung (37) zugeführt ist, wonach sofort der Hydraulikzylinder (35) an die Rücklaufleitung (40) angeschlossen ist.

14. Vorrichtung nach Anspruch 6, dadurch gekennzeichnet, daß das Werkzeug als Pressenkolben (60) ausgebildet ist, wobei in einem als Gegenwerkzeug dienendem zylindrischen Gefäß (59) ein Vibrator in Form zweier gegeneinander schwingender Scheiben (62, 63) untergebracht ist.

15. Vorrichtung nach Anspruch 6, dadurch gekennzeichnet, daß die Vorrichtung in Form eines Backenbrechers ausgebildet ist, dessen als Gegenwerkzeug ausgebildete nicht verschwenkbare Backe (72) zu einer Schwingung parallel zu sich selbst erregt ist.

16. Vorrichtung nach Anspruch 6, dadurch gekennzeichnet, daß die Vorrichtung als Kugelmühle ausgebildet ist, deren Mahlgefäß (75) mittels des Arbeitszylinders (335) axial in Schwingungen versetzbar ist.

**Claims**

1. A method of working and processing materials, in particular mobile solid mixtures and dispersions, by means of oscillating tools, in which the tool and/or the tool counterpart is acted upon by a sequence of non-sinusoidal pulses, characterised in that in the course of the treatment the accelerations and/or the oscillation frequency and/or the oscillation amplitude form is repeatedly changed in a continuous manner, in that in a hydraulic control slide valve having a rotating control piston, the piston is axially displaced and/or its speed of rotation thereof is continuously changed.

2. A method as claimed in Claim 1, characterised in that the oscillation frequency is repeatedly caused to vary between two limiting values.

3. A method as claimed in Claim 1, characterised in that the tool and the tool counterpart are subjected to vibratory movement in phase opposition.

4. A method as claimed in Claim 1, characterised in that the vibratory movement is transverse to the direction of movement of the tool.

5. A method as claimed in Claim 1, characterised in that the vibratory movement is interrupted when the tool and the tool counterpart have approached one another to such an extent that the spacing or end value falls below a specific predetermined value.

6. Apparatus for carrying out the method claimed in one or more of Claims 1 to 5, comprising a hydraulic servo-motor which acts upon the tool and/or the tool counter-part and which is supplied with hydraulic liquid from a control slide valve which connects the servo-motor in a continuously repetitive sequence and in very rapid alternation, on the one hand, to the return line and, on the other hand, to the pressure line, characterised by a device which acts upon the control slide valve (15, 21, 50) and which serves to change the frequency and/or the amplitude of parts (16, 22, 51) of the control slide valve which move therein, and further characterised by a device by means of which the speed of rotation of the drive motor can be changed.

7. Apparatus as claimed in Claim 6, which causes the precipitation of specifically heavier components, in particular for the separation of solids from the liquid phase of a dispersion, said apparatus consisting of at least one vessel or container, wherein at least one body provided with a vibration drive is arranged in the vessel or container, characterised in that the vibration drive consists of a hydraulic cylinder-piston unit, or that the body, which is provided with a vibration drive, is a hollow body (8) filled with hydraulic liquid (9) ; and that the hydraulic cylinder-piston unit of the hollow body is assigned a hydraulic control device which has a rotating or oscillating control piston (16) by means of which the pipeline (12) which leads for the hydraulic cylinder or the hollow body, can be connected alternately to the pressure line (19) and the return line (20).

8. Apparatus as claimed in Claim 7, characterised in that the body which is provided with a vibration drive consists of at least one pair of plates (33) which are connected to one another by the vibration drive.

9. Apparatus as claimed in Claim 7, characterised in that a horizontally arranged plate or a horizontally arranged vibrating body (2) is located on the base of the container (1).

10. Apparatus as claimed in Claim 7, characterised in that nozzles (10) for the outlet of air or oxygen are arranged on the base of the container (1).

11. Apparatus as claimed in Claim 10, characterised in that the vibrating plate or the vibrating hollow body (7) on the base of the container (1) is perforated and the nozzles (10) arranged in or beneath the perforations.

12. Apparatus as claimed in Claim 6, characterised by a control device (47) for the vibration motor which disconnects the said motor when the spacing between the tool and the tool counterpart falls below a specific predeterminable value.

13. Apparatus as claimed in Claim 6, characterised in that the tool and the tool counterpart are formed by a pair of rollers (32, 33) of which at least one roller (33) is subjected to an axial oscillatory movement by means of a hydraulic cylinder (35), the hydraulic cylinder being supplied from a control device (38) in a continuously changing sequence with pressure liquid through the pipeline (37), whereupon the hydraulic cylinder (35) is immediately connected to the return line (40).

14. Apparatus as claimed in Claim 6, characterised in that the tool is designed as a pressing piston (60), and a vibrator consisting of two plates (62, 63) which oscillate in opposition to one another is accomodated in a cylindrical vessel (59) which serves as the tool counterpart.

15. Apparatus as claimed in Claim 6, characterised in that the apparatus is in the form of a jaw crusher whose non-pivotable jaw (72), which serves as the tool counterpart, is energised to execute an oscillation parallel to itself.

16. Apparatus as claimed in Claim 6, characterised in that the apparatus is in the form of a ball mill, the grinding vessel (75) of which can be set in axial oscillation by means of the working cylinder (335).

**Revendications**

1. Procédé pour le travail et le traitement de matériaux, notamment des mélanges fluides de matières solides et des dispersions, par des outils oscillants, où l'outil et/ou le contre-outil sont sollicités par une séquence d'impulsions de forme non sinusoïdale, caractérisé en ce que, au cours du traitement, on modifie plusieurs fois et de façon continue les accélérations et/ou la fréquence d'oscillation et/ou l'amplitude d'oscillation en assurant, dans un distributeur hydraulique de commande avec piston rotatif de distribution, un déplacement axial de ce dernier et une modification continue de sa vitesse de rotation.

2. Procédé selon la revendication 1, caractérisé en ce qu'on fait varier la fréquence d'oscillation plusieurs fois entre deux valeurs limites.

3. Procédé selon la revendication 1, caractérisé en ce que l'outil et le contre-outil sont sollicités par un mouvement vibratoire, en opposition de phase.

4. Procédé selon la revendication 1, caractérisé en ce que le mouvement vibratoire est orienté perpendiculairement à la direction de déplacement de l'outil.

5. Procédé selon la revendication 1, caractérisé en ce qu'on interrompt le mouvement vibratoire, lorsque l'outil et le contre-outil se sont rapprochés suffisamment pour que leur espacement tombe en dessous d'une valeur limite définie prédéterminée.

6. Appareillage pour la mise en œuvre du procédé selon une ou plusieurs des revendications 1 à 5, comportant un servomoteur hydraulique agissant sur un outil et/ou sur un contre-outil, et qui est sollicité au moyen d'un liquide hydraulique provenant d'un distributeur de commande qui relie le servomoteur selon une séquence variant d'une manière très rapide et alternativement une fois avec le conduit de retour et l'autre fois avec le conduit de mise en pression, caractérisé par un dispositif agissant sur le distributeur de commande (15, 21, 50), et à l'aide duquel la fréquence et/ou l'amplitude du mouvement des parties (16, 22, 51) se déplaçant dans le distributeur est modifiée, et par un dispositif à l'aide duquel la vitesse de rotation du moteur d'entraînement est modifiée.

7. Appareillage selon la revendication 6, pour permettre la décantation de parties spécifiquement plus lourdes, notamment pour la séparation de substances solides par rapport à la phase liquide d'une dispersion, se composant d'au moins un récipient ou bac, dans lequel il est prévu dans le récipient ou bac au moins un corps pourvu d'un dispositif d'entraînement en vibration, caractérisé en ce que le dispositif d'entraînement en vibration se compose d'un ensemble hydraulique à cylindre et piston, ou bien en ce que le corps pourvu d'un dispositif d'entraînement en vibration est un corps creux (8) rempli d'un liquide hydraulique (9), et en ce que l'ensemble hydraulique à cylindre et piston, ou bien le corps creux, est associé à un appareil hydraulique de commande qui comporte un piston distributeur tournant ou oscillant à l'aide duquel le conduit (12), aboutissant au cylindre hydraulique ou au corps creux, peut être relié alternativement au conduit de mise en pression (19) et au conduit de retour (20).

8. Appareillage selon la revendication 7, caractérisé en ce que le corps pourvu d'un dispositif d'entraînement en vibration se compose d'au moins une paire de plaques (33), qui sont reliées entre elles par le dispositif d'entraînement en vibration.

9. Appareillage selon la revendication 7, caractérisé en ce que sur le fond du bac (1) est disposée une plaque placée horizontalement ou bien un corps vibrant (7) placé horizontalement.

10. Appareillage selon la revendication 7, caractérisé en ce qu'il est prévu sur le fond du bac (1) des buses (10) pour la sortie d'air ou d'oxygène.

11. Appareillage selon la revendication 10, caractérisé en ce que la plaque vibrante ou le corps creux vibrant (7) placé sur le fond du bac (1) est perforé, et les buses (10) sont disposées dans ou en dessous des trous.

12. Appareillage selon la revendication 6, caractérisé par un appareil de commande (47) du moteur de vibration, qui arrête celui-ci lorsque l'espacement entre un outil et un contre-outil tombe en dessous d'une valeur définie prédéterminable.

13. Appareillage selon la revendication 6, caractérisé en ce que l'outil et le contre-outil sont constitués par une paire de cylindres (32, 33), parmi lesquels au moins un cylindre (33) est déplacé axialement en oscillation au moyen d'un cylindre hydraulique (35), qui reçoit selon une séquence constamment alternée, du liquide sous pression provenant d'un appareil distributeur (38) par l'intermédiaire du conduit (37), ce cylindre hydraulique (35) étant ensuite immédiatement relié au conduit de retour (40).

14. Appareillage selon la revendication 6, caractérisé en ce que l'outil est agencé sous forme d'un piston de presse (60), auquel cas il est prévu, dans un récipient cylindrique (59) servant de contre-outil, un vibreur se présentant sous forme de deux disques (62, 63) oscillant l'un vers l'autre.

15. Appareillage selon la revendication 6, caractérisé en ce que le dispositif est agencé sous forme d'un broyeur à mâchoires, dont la mâchoire (72) non pivotante et agencée sous forme d'un contre-outil est mise en vibration parallèlement à elle-même.

16. Appareillage selon la revendication 6, caractérisé en ce que le dispositif est agencé sous forme d'un broyeur à boulets, dont le récipient de broyage (75) est mis axialement en vibration au moyen du cylindre de travail (335).

10

FIG. 1

5   6

1   2   3

FIG. 2

6

1   2   3   4   3

FIG. 3

1   2   7

0 042 919

FIG.4

FIG.5

FIG.6

2

**0 042 919**

FIG.7

FIG.8

FIG.9

FIG.10

3

FIG.11

FIG.12

FIG.13

FIG.14

FIG.15